# EUROPEAN PATENT APPLICATION

(11) **EP 0 523 876 A2**
(43) Date of publication of application: **20.01.1993**
(21) Application number: 92305968.7
(22) Date of filing: 29.06.1992
(51) Int. Cl.: G01N 1/22

(54) **Gas sampling apparatus**

(30) Priority: 18.07.1991 US 732998
(71) Applicant: INDUSTRIAL FILTER & PUMP MFG.CO., Cicero Illinois 60650 (US)
(72) Inventor: Zievers, James F.#, LaGrange, Illinois 60525 (US)
(74) Representative: Leale, Robin George

(57) **Abstract**

A gas sampling device includes a tubular ceramic filter element (30) sealably mounted to a mounting plate (12) and a locking member (36) which secures the filter element to the mounting plate. The locking member includes a filter element cleaning nozzle (66) which directs high velocity pulses of a cleaning gas into the filter element. An annular passageway (67) surrounds the cleaning nozzle and carries gas from the filter element to an outlet port (60) spaced a substantial distance from the open end of the nozzle.

## Description

The present invention relates in general to apparatus for obtaining samples of gas from high pressure systems, and it relates more particularly to a gas sampling apparatus for use with a high temperature, high pressure system.

There is a need in many industrial applications to monitor the composition of high temperature gasses within a high pressure system. The instruments used to analyze such gasses are subject to damage from particulates which are sometimes present in such gasses, whereby it is difficult to analyze these gasses prior to some processing stages such as filtration and the like.

According to the present invention there is provided gas sampling apparatus comprising, in combination, a rigid mounting plate having a circular bore extending therethrough,
a counterbore at one end of said bore defining an annular shoulder facing said one end,
a tubular filter element having an external annular flange at one end,
a locking member secured to said plate over said bore and having a cylindrical portion fitted into said counterbore,
said filter element extending through said bore with said one end of said filter element disposed within said counterbore,
annular gas sealing means surrounding said locking member and disposed between said plate and said locking member for providing a gas-tight seal between said plate and said locking member,
said locking member having an axial bore therethrough opening into said filter element,
a first tube formed of a gas impervious material mounted in said axial bore in said locking member and having a transverse gas outlet port therein for carrying gas from the interior of said filter element,
a second tube mounted to said first tube in coaxial relationship therewith,
said second tube extending from said first tube a short distance into said filter element, and
the exterior wall of said second tube being spaced from the interior wall of said first tube to provide an annular conduit extending between the interior of said filter element and said transverse outlet port.

An embodiment of the invention will now be described by way of example and with reference to the accompanying drawings, in which:-
Fig. 1 is a fragmentary, elevational cross-sectional view of gas sampling apparatus embodying the present invention;
Fig. 2 is a top view of the apparatus shown in Fig. 1; and
Fig. 3 is an elevational view of a pressure vessel to which the apparatus of Fig. 1 is mounted.

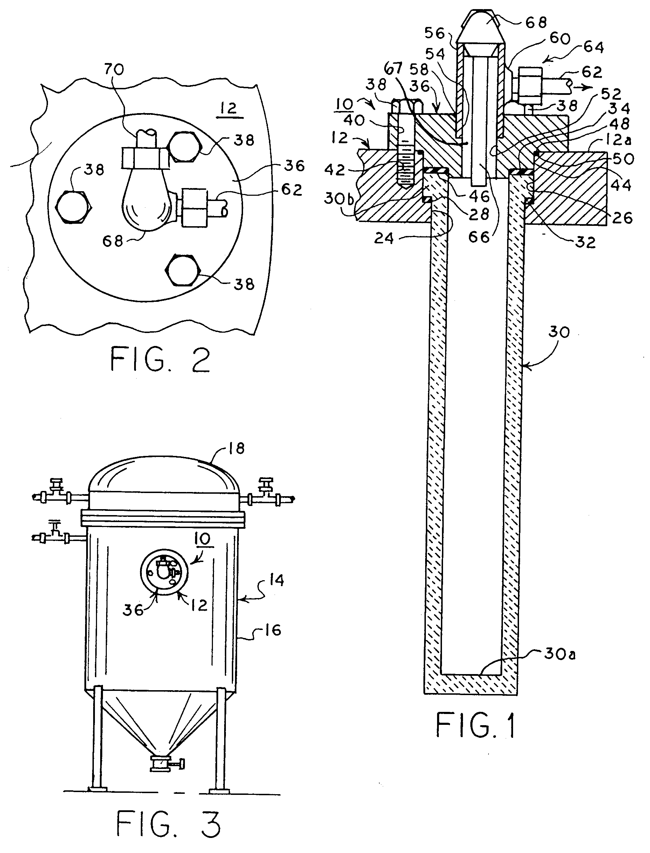

Referring to Fig. 1, gas sampling apparatus 10 includes a mounting plate 12 which is rigid and is preferably formed of a metal which is not corrodible by the gas to be sampled. Other materials such as a suitable plastic may be used if desired.

The mounting plate 12 is adapted to be mounted over an opening in a pressure vessel constituting a part of the system containing the gas to be sampled. In some applications the plate may be mounted to a gas conduit. As shown in Fig. 3, the gas sampling apparatus 10 is mounted to a pressure vessel 14 including a tank 16 and a cover 18. The apparatus 10 is mounted to the tank by means of a peripheral weld over a circular opening in the wall of the tank. In this case the mounting plate is circular, but any suitable shape may be used depending on the application. In some cases the apparatus may be mounted within the vessel.

The mounting plate 12 is formed with a bore 24 and counterbore 26 which are separated by an annular shoulder 28 which faces toward the outer face 12a (upper in Fig. 1) of the mounting plate 12. A filter element 30 is preferably formed of a porous ceramic material but can be made from other suitable materials such as porous metal. It has a tubular configuration which is circular in cross-section and closed at the inner or distal end 30a. The outer end of the filter element 30 is open and provided with an external annular flange 30b.

The filter element 30 extends through the bore 24 with the flange 30b being received in the counterbore 26. An annular dust sealing gasket 32 is disposed between the shoulder 28 and the flange 30b as shown in Fig. 1. A second annular sealing gasket 34 is disposed over the outer end of the filter element. A locking member 36 is removably secured to the mounting plate over the counterbore 26 by means of a plurality of bolts 38 which extend through through-holes 40 in the locking member 36 and are threadedly received in threaded blind holes 42 in the mounting plate 12. The locking member 36 has a cylindrical portion 44 which extends into the counterbore 26. The distal end of the locking member 36 fits into the outer end of the filter element with an annular face 46 positioned against the gasket 34. The locking member, the plate 12 and the outer end of the filter element are dimensioned such that the gaskets are compressed to a thickness less than the unstressed dimensions thereof so that expansion and contraction of the mounting plate and the locking member do not fracture the relatively fragile filter element. The gaskets 32 and 34 are preferably formed of ceramic matting which constitutes an excellent dust seal but is unable to withstand any significant differential pressure thereacross. A high pressure seal is provided between the locking member and the mounting plate 12 by means of a resilient O-ring sealing member 48 which is fitted in an annular groove 50 at the outer end of the counterbore 30b and compressed between the mounting plate 12 and the locking member 36 to prevent any leakage of gas from the interior of the apparatus 10 to the ambient.

The locking member 36 is formed with a central bore 52 and a counterbore 54 at the outer end of the bore 52. A rigid tube 56 is fitted into the counterbore 54 and is affixed to the locking member 36 by means of a peripheral weld 58. An opening 60 is provided in the side of the tube 56 exteriorly of the locking member 36 to supply gas from the interior of the filter element 30 to an outlet duct 62 which is connected to the tube 56 over the opening 60 by a conventional pipe fitting 64.

During use, fine particles in the form of dust are deposited on the exterior wall of the filter element and must be periodically removed to prevent impairment of the operation of the apparatus. For the purpose of cleaning the filter element a backpressure cleaning nozzle 66 extends through the tube 56 a short distance into the filter element 30 from an elbow fitting 68 mounted over the top of the tube 56. A tapered portion of the elbow fitting fits tightly into the outer end of the tube 56 and is hermetically sealed thereto. A duct 70 which carries pulses of a high velocity cleaning gas is suitably connected to the fitting 68 in a conventional manner.

It may be seen from an inspection of Fig. 1 that there is an annular conduit 67 of considerable length between the distal end of the nozzle tube 66 and the gas outlet port 60 in the wall of the tube 56. Consequently, the filter element may be cleaned even while the duct 62 is open because of the substantial back pressure provided by the elongate annular conduit 67. In the absence of some means for restricting the flow of the cleaning gas from the nozzle 66 to the outlet duct 60 the cleaning gas will simply flow directly to the gas outlet rather in the reverse direction through the filter element 30 to dislodge the filter cake which had been deposited thereon.

While the present invention has been described in connection with a particular embodiment thereof, it will be understood by those skilled in the art that many changes may be made without departing from the scope of the invention as defined by the appended claims.

## Claims

1. Gas sampling apparatus comprising, in combination, a rigid mounting plate (12) having a circular bore (24) extending therethrough,
a counterbore (26) at one end of said bore defining an annular shoulder (28) facing said one end,
a tubular filter element (30) having an external annular flange (30b) at one end,
a locking member (36) secured to said plate over said bore and having a cylindrical portion (44) fitted into said counterbore,
said filter element extending through said bore with said one end of said filter element disposed within said counterbore,
annular gas sealing means (48) surrounding said locking member and disposed between said plate and said locking member for providing a gas-tight seal between said plate and said locking member,
said locking member having an axial bore (52) therethrough opening into said filter element,
a first tube (56) formed of a gas impervious material mounted in said axial bore in said locking member and having a transverse gas outlet port (60) therein for carrying gas from the interior of said filter element,
a second tube (66) mounted to said first tube in coaxial relationship therewith,
said second tube extending from said first tube a short distance into said filter element, and
the exterior wall of said second tube being spaced from the interior wall of said first tube to provide an annular conduit (67) extending between the interior of said filter element and said transverse outlet port.

2. Apparatus as claimed in claim 1, wherein said tubular filter element (30) is made of a ceramic material.

3. Apparatus as claimed in claim 1 or 2, further comprising annular dust sealing means (32) surrounding said filter element (30) and compressed between said filter element and said plate (12).
